# EUROPEAN PATENT SPECIFICATION

(11) **EP 1 410 189 B1**
(45) Date of publication and mention of the grant of the patent: **27.02.2008**
(21) Application number: 02749158.8
(22) Date of filing: 22.07.2002
(51) Int. Cl.: G06F 9/445, H04Q 7/32

(54) **SYSTEM AND METHOD FOR ORGANIZING FIELD UPGRADABLE WIRELESS COMMUNICATION DEVICE SOFTWARE**
SYSTEM UND VERFAHREN ZUM ORGANISIEREN DER SOFTWARE EINES IM FELD AKTUALISIERBAREN DRAHTLOSEN KOMMUNIKATIONSGERÄTES
SYSTEME ET PROCEDE POUR LA GESTION DE LOGICIEL DE DISPOSITIF DE COMMUNICATIONS SANS FIL POUVANT ETRE MIS A JOUR, EN CONDITIONS D'EXPLOITATION

(30) Priority: 26.07.2001 US 917026; 26.07.2001 US 916460; 26.07.2001 US 916900; 10.08.2001 US 927131; 02.10.2001 US 969305
(43) Date of publication of application: 21.04.2004
(73) Proprietor: Kyocera Wireless Corp., San Diego, CA 92121 (US)
(72) Inventor: RAJARAM, Gowri, Oceanside, CA 92056 (US); SECKENDORF, Paul, San Diego, CA 92129 (US); KAPLAN, Diego, San Diego, CA 92109 (US)
(74) Representative: Viering, Jentschura & Partner
(86) International application number: PCT/IB2002/002867
(87) International publication number: WO 2003/010658

(56) References cited:
- EP-A- 0 889 405
- WO-A-00/73912
- WO-A-93/00633
- DE-A- 19 502 728
- GB-A- 2 349 485
- US-A- 5 784 537
- US-A- 5 938 766

## Description

### BACKGROUND OF THE INVENTION

### 1. Field of the Invention

This invention generally relates to wireless communications devices and, more particularly, to a system and method of organizing software in a manner that permits updates and changes to be made to the system software of a wireless communications device in the field, via an airlink interface.

### 2. Description of the Related Art

It is not uncommon to release software updates for phones that are already in the field. These updates may relate to problems found in the software once the phones have been manufactured and distributed to the public. Some updates may involve the use of new features on the phone, or services provided by the service provider. Yet other updates may involve regional problems, or problems associated with certain carriers. For example, in certain regions the network layout of carriers may impose airlink interface conditions on the handset that cause the handset to demonstrate unexpected behavior such as improper channel searching, improper call termination, improper audio, or the like.

The traditional approach to such updates has been to recall the wireless communications device, also referred to herein as a wireless device, phone, telephone, or handset, to the nearest carrier retail/service outlet, or to the manufacturer to process the changes. The costs involved in such updates are extensive and eat into the bottom line. Further, the customer is inconvenienced and likely to be irritated. Often times, the practical solution is to issue the customer new phones.

One example conventional system for configuring software in a telecommunication device is described in US 5,771,386 (DE 19,502,728) ("Baumbauer"). Baumbauer relates to a telecommunication device having software that includes several separately compilable program units. To reduce the time necessary for manufacturing the device and the time necessary for implementing software changes, Baumbauer teaches that the program units each have a header which contains addresses (Ap1, Ap2, Ad) used for addressing procedures and/or data combined in the program units. Furthermore, a catalogue that contains references for addressing the headers of the program units is provided. The catalogue is available to all the loaded program units. Within the framework of the manufacture of the telecommunication device, the predefined program units need not be linked when the software of the telecommunication device is implemented. Baumbauer fails to teach a field upgradeable wireless communication device.

It would be advantageous if wireless communications device software could be upgraded cheaply, and without inconvenience to the customer.

It would be advantageous if wireless communications device software could be upgraded without the customer losing the use of their phones for a significant period of time.

It would be advantageous if wireless communications device software could be updated with a minimum of technician service time, or without the need to send the device into a service facility.

It would be advantageous if the wireless device software could be organized to permit field modifications via an airlink interface.

### SUMMARY OF THE INVENTION

Wireless communications device software updates give customers the best possible product and user experience. An expensive component of the business involves the recall of handsets to update the software. These updates may be necessary to offer the user additional services or to address problems discovered in the use of the phone after it has been manufactured. The present invention makes it possible to practically upgrade handset software in the field, via the airlink interface.

The present invention provides a method for managing software in a wireless communications device according to claim 1 and a wireless communication device having a field upgradeable system software according to claim 12. Preferred embodiments of the present invention are described in the dependent claims 2 to 11 and 13 to 23, respectively.

Accordingly, a method is provided for organizing field upgradeable system software in a wireless communications device. The method comprises: forming system software code into a first plurality of symbol libraries, each library comprising symbols having related functionality; arranging the first plurality of symbol libraries into a second plurality of code sections so that symbol libraries start at the start of code sections; creating a second plurality of contiguously addressed memory blocks; identifying each memory block with a corresponding code section; storing code sections in the identified memory blocks, with the start of code sections at corresponding start addresses; maintaining a code section address table cross-referencing code section identifiers with corresponding start addresses; and, executing the wireless device system software.

Forming system software code into a first plurality of symbol libraries includes forming a symbol accessor code. Arranging the first plurality of symbol libraries into a second plurality of code sections includes arranging each symbol to be offset from its respective code section start address, and includes arranging the symbol accessor code in a first code section. Then, the method further comprises: maintaining a symbol offset address table cross-referencing symbol identifiers with corresponding offset addresses, and corresponding code section identifiers; and, storing the symbol accessor code address in a first location in memory.

The code section address table, the symbol offset address table, and read-write data for all the symbol libraries, the symbol accessor code which calculates the addresses of symbols in the library while executing the system software, and the and symbol accessor code address are arranged as symbol libraries in a common code section, typically a patch manager code section. The read-write data, the code section address table, the symbol offset address table, the symbol accessor code address, and the symbol accessor code are loaded and accessed from random access volatile read-write memory.

The code sections are sized to accommodate arranged symbol libraries, or to be larger than the arranged symbol libraries, in case the symbol libraries are updated with larger libraries. The contiguously addressed memory blocks exactly accommodate the corresponding code sections.

Additional details of the above-described method, and a wireless communications device field upgradeable system software structure, are provided below.

### BRIEF DESCRIPTION OF THE DRAWINGS

Fig. 1 is a schematic block diagram of the overall wireless device software maintenance system.
Fig. 2 is a schematic block diagram of the software maintenance system, highlighting the installation of instruction sets via the airlink interface.
Fig. 3 is a schematic block diagram of the present invention held upgradeable system software structure, for use in the wireless communications device.
Fig. 4 is a schematic block diagram of the wireless device memory.
Fig. 5 is a table representing the code section address table of Fig. 3.
Fig. 6 is a detailed depiction of symbol library one of Fig. 3, with symbols.
Fig. 7 is a table representing the symbol offset address table of Fig. 3.
Figs. 8a and 8b are flowcharts illustrating the present invention method for organizing field upgradeable system software in a wireless communications device.

### DETAILED DESCRIPTION OF THE PREFERRED EMBODIMENTS

Some portions of the detailed descriptions that follow are presented in terms of procedures, steps, logic blocks, codes, processing, and other symbolic representations of operations on data bits within a wireless device microprocessor or memory. These descriptions and representations are the means used by those skilled in the data processing arts to most effectively convey the substance of their work to others skilled in the art. A procedure, microprocessor executed step, application, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a microprocessor based wireless device. It has proven convenient at times, principally for reasons of common usage, to refer to these signals as bits, values, elements, symbols, characters, terms, numbers, or the like. Where physical devices, such as a memory are mentioned, they are connected to other physical devices through a bus or other electrical connection. These physical devices can be considered to interact with logical processes or applications and, therefore, are "connected" to logical operations. For example, a memory can store or access code to further a logical operation.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "processing" or "connecting" or "translating" or "displaying" or "prompting" or "determining" or "displaying" or "recognizing" or the like, refer to the action and processes of in a wireless device microprocessor system that manipulates and transforms data represented as physical (electronic) quantities within the computer system's registers and memories into other data similarly represented as physical quantities within the wireless device memories or registers or other such information storage, transmission or display devices.

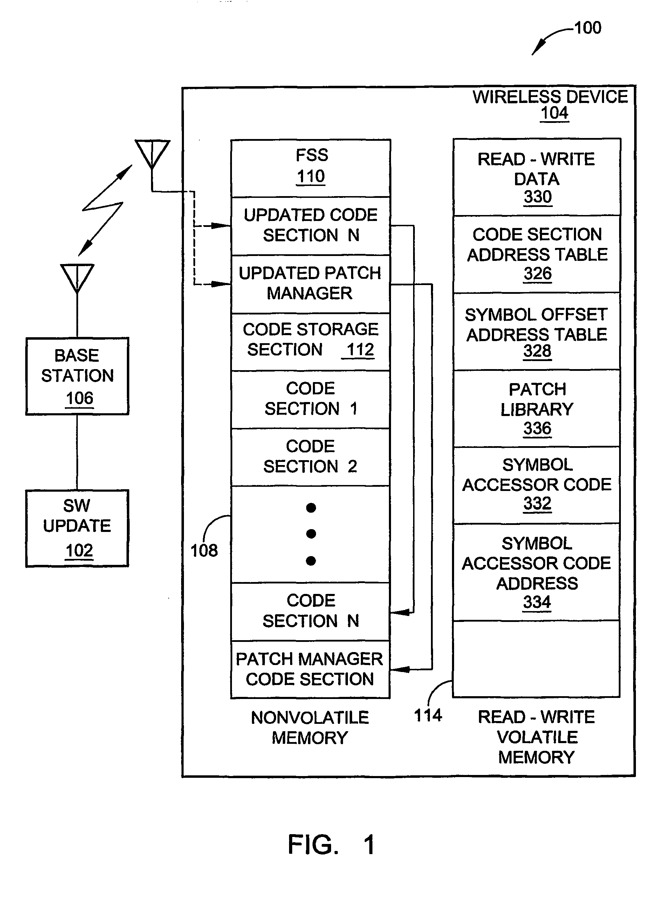

Fig. 1 is a schematic block diagram of the overall wireless device software maintenance system 100. The present invention system software organization is presented in detail below, following a general overview of the software maintenance system 100. The general system 100 describes a process of delivering system software updates and instruction sets (programs), and installing the delivered software in a wireless device. System software updates or patch maker instruction sets (PMIS) are created by the manufacturer of the handsets. The system software is organized into symbol libraries. The symbol libraries are arranged into code sections. When symbol libraries are to be updated, the software update 102 is transported as one or more code sections. The software update is broadcast to wireless devices in the field, of which wireless communications device 104 is representative, or transmitted in separate communications from a base station 106 using well known, conventional air, data or message transport protocols. The invention is not limited to any particular transportation format, as the wireless communications device can be easily modified to process any available over-the-air transport protocol for the purpose of receiving system software and PMIS updates.

The system software can be viewed as a collection of different subsystems. Code objects can be tightly coupled into one of these abstract subsystems and the resulting collection can be labeled as a symbol library. This provides a logical breakdown of the code base and software patches and fixes can be associated with one of these symbol libraries. In most cases, a single update is associated with one, or at most two, symbol libraries. The rest of the code base, the other symbol libraries, remain unchanged.

The notion of symbol libraries provides a mechanism to deal with code and constants. The read-write (RW) data, on the other hand, fits into a unique individual RW library that contains RAM based data for all libraries.

Once received by the wireless device 104, the transported code section must be processed. This wireless device over-writes a specific code section of nonvolatile memory 108. The nonvolatile memory 108 includes a file system section (FSS) 110 and a code storage section 112. The code section is typically compressed before transport in order to minimize occupancy in the FSS 110. Often the updated code section will be accompanied by its RW data, which is another kind of symbol library that contains all the RW data for each symbol library. Although loaded in random access volatile read-write memory 114 when the system software is executing, the RW data always needs to be stored in the nonvolatile memory 108, so it can be loaded into random access volatile read-write memory 114 each time the wireless device is reset. This includes the first time RW data is loaded into random access volatile read-write memory. As explained in more detail below, the RW data is typically arranged with a patch manager code section.

The system 100 includes the concept of virtual tables. Using such tables, symbol libraries in one code section can be patched (replaced), without breaking (replacing) other parts of the system software (other code sections). Virtual tables execute from random access volatile read-write memory 114 for efficiency purposes. A code section address table and symbol offset address table are virtual tables.

The updated code sections are received by the wireless device 104 and stored in the FSS 110. A wireless device user interface (UI) will typically notify the user that new software is available. In response to UI prompts the user acknowledges the notification and signals the patching or updating operation. Alternately, the updating operation is performed automatically. The wireless device may be unable to perform standard communication tasks as the updating process is performed. The patch manager code section includes a non-volatile read-write driver symbol library that is also loaded into random access volatile read-write memory 114. The non-volatile read-write driver symbol library causes code sections to be overwritten with updated code sections. As shown in the figure, code section n and the patch manager code sections are overwritten with updated code sections. The patch manager code section includes the read-write data, code section address table, and symbol offset address table, as well a symbol accessor code and the symbol accessor code address (discussed below). Portions of this data are invalid when updated code sections are introduced, and an updated patch manager code section includes read-write data, a code section address table, and a symbol offset address table valid for the updated code sections. Once the updated code sections are loaded into the code storage section 112, the wireless device is reset. Following the reset operation, the wireless device can execute the updated system software. It should also be understood that the patch manager code section may include other symbol libraries that have not been discussed above. These other symbol libraries need not be loaded into read-write volatile memory 114.

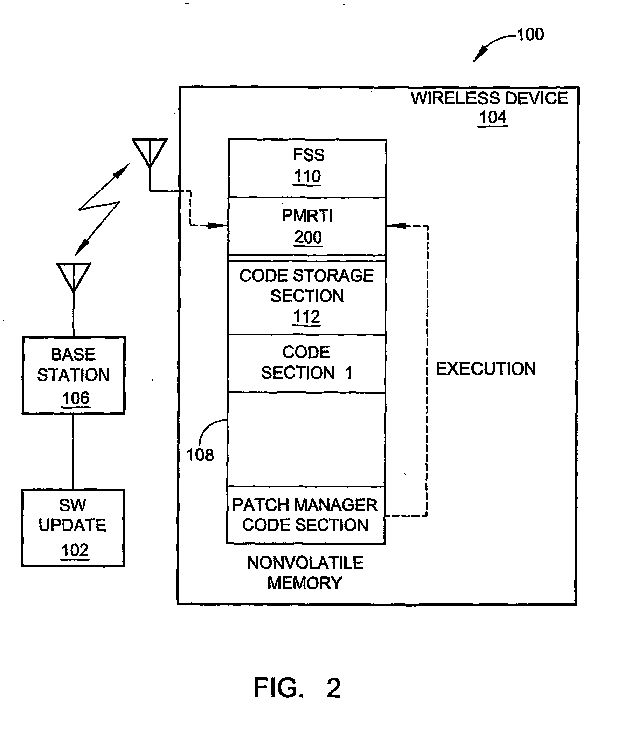

Fig. 2 is a schematic block diagram of the software maintenance system 100, highlighting the installation of instruction sets via the airlink interface. In addition to updating system software code sections, the maintenance system 100 can download and install instructions sets or programs, referred to herein as patch maker instruction set (PMIS). The PMIS code section 200 is transported to the wireless device 104 in the same manner as the above-described system software code sections. PMIS code sections are initially stored in the FSS 110. A PMIS code section is typically a binary file that may be visualized as compiled instructions to the handset. A PMIS code section is comprehensive enough to provide for the performance of basic mathematical operations and the performance of conditionally executed operations. For example, an RF calibration PMIS could perform the following operations:
*IF RF CAL ITEM IS LESS THAN X*
*EXECUTE INSTRUCTION*
*ELSE*
*EXECUTE INSTRUCTION*

A PMIS can support basic mathematical operations, such as: addition, subtraction, multiplication, and division. As with the system software code sections, the PMIS code section may be loaded in response to UI prompts, and the wireless device must be reset after the PMIS is loaded into code storage section 112. Then the PMIS section can be executed. If the PMIS code section is associated with any virtual tables or read-write data, an updated patch manager code section will be transported with the PMIS for installation in the code storage section 112. Alternately, the PMIS can be kept and processed from the FSS 110. After the handset 104 has executed all the instructions in the PMIS section, the PMIS section can be deleted from the FSS 110.

In some aspects of the invention, the organization of the system software into symbol libraries may impact the size of the volatile memory 114 and nonvolatile memory 108 required for execution. This is due to the fact that the code sections are typically larger than the symbol libraries arranged in the code sections. These larger code sections exist to accommodate updated code sections. Organizing the system software as a collection of libraries impacts the nonvolatile memory size requirement. For the same code size, the amount of nonvolatile memory used will be higher due to the fact that code sections can be sized to be larger than the symbol libraries arranged within.

PMIS is a very powerful runtime instruction engine. The handset can execute any instruction delivered to it through the PMIS environment. This mechanism may be used to support RF calibrations and PRI updates. More generally, PMIS can be used to remote debug wireless device software when software problems are recognized by the manufacturer or service provider, typically as the result of user complaints. PMIS can also record data needed to diagnose software problems. PMIS can launch newly downloaded system applications for data analysis, debugging, and fixes. PMIS can provide RW data based updates for analysis and possible short term fix to a problem in lieu of an updated system software code section. PMIS can provide memory compaction algorithms for use by the wireless device.

Once software updates have been delivered to the wireless device, the software maintenance system 100 supports memory compaction. Memory compaction is similar to disk de-fragmentation applications in desktop computers. The compaction mechanism ensures that memory is optimally used and is well balanced for future code section updates, where the size of the updated code sections are unpredictable. The system 100 analyzes the code storage section as it is being patched (updated). The system 100 attempts to fit updated code sections into the memory space occupied by the code section being replaced. If the updated code section is larger than the code section being replaced, the system 100 compacts the code sections in memory 112. Alternately, the compaction can be calculated by the manufacturer or service provider, and compaction instructions can be transported to the wireless device 104.

Compaction can be a time consuming process owing to the complexity of the algorithm and also the vast volume of data movement. The compaction algorithm predicts feasibility before it begins any processing. UI prompts can be used to apply for permission from the user before the compaction is attempted.

In some aspects of the invention, all the system software code sections can be updated simultaneously. A complete system software upgrade, however, would require a larger FSS 110.

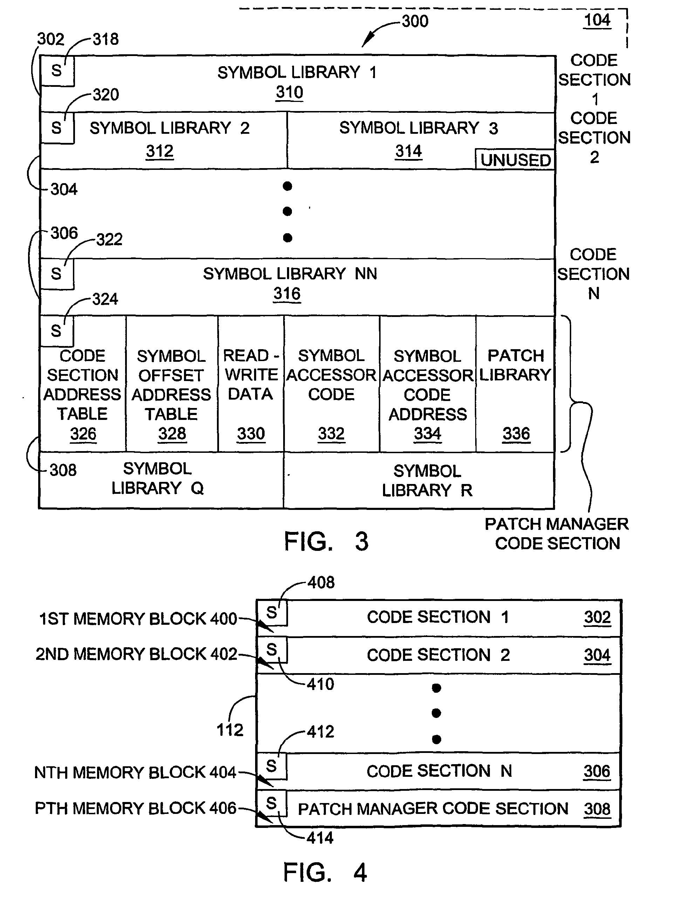

Fig. 3 is a schematic block diagram of the present invention field upgradeable system software structure, for use in the wireless communications device 104. The system software structure 300 comprises executable system software differentiated into a second plurality of code sections. Shown are code sections one (302), two (304), and *n* (306), as well as the patch manager code section 308, however the invention is not limited to any particular number of code sections. The system 300 further comprises a first plurality of symbol libraries arranged into the second plurality of code sections. Shown are symbol library one (310) arranged in code section one (302), symbol libraries two (312) and three (314) arranged in code section two (304), and symbol library m (316) arranged in code section n (306). Each library comprises symbols having related functionality. For example, symbol library one (310) may be involved in the operation of the wireless device liquid crystal display (LCD). Then, the symbols would be associated with display functions. As explained in detail below, additional symbol libraries are arranged in the patch manager code section 308.

Fig. 4 is a schematic block diagram of the wireless device memory. As shown, the memory is the code storage section 112 of Fig. 1. The memory is a writeable, nonvolatile memory, such as Flash memory. It should be understood that the code sections need not necessarily be stored in the same memory as the FSS 110. It should also be understood that the present invention system software structure could be enabled with code sections stored in a plurality of cooperating memories. The code storage section 112 includes a second plurality of contiguously addressed memory blocks, where each memory block stores a corresponding code section from the second plurality of code sections. Thus, code section one (302) is stored in a first memory block 400, code section two (304) in the second memory block 402, code section n (306) in the *n*th memory block 404, and the patch manager code section (308) in the *p*th memory block 406.

Contrasting Figs. 3 and 4, the start of each code section is stored at corresponding start addresses in memory, and symbol libraries are arranged to start at the start of code sections. That is, each symbol library begins at a first address and runs through a range of addresses in sequence from the first address. For example, code section one (302) starts at-the first start address 408 (marked with "S") in code storage section memory 112. In Fig. 3, symbol library one (310) starts at the start 318 of the first code section. Likewise code section two (304) starts at a second start address 410 (Fig. 4), and symbol library two starts at the start 320 of code section two (Fig. 3). Code section n (306) starts at a third start address 412 in code storage section memory 112 (Fig. 4), and symbol library *m* (316) starts at the start of code section n 322 (Fig. 3). The patch manager code section starts atpth start address 414 in code storage section memory 112, and the first symbol library in the patch manager code section 308 starts at the start 324 of the patch manager code section. Thus, symbol library one (310) is ultimately stored in the first memory block 400. If a code section includes a plurality of symbol libraries, such as code section two (304), the plurality of symbol libraries are stored in the corresponding memory block, in this case the second memory block 402.

In Fig. 3, the system software structure 300 further comprises a code section address table 326 as a type of symbol included in a symbol library arranged in the patch manager code section 308. The code section address table cross-references code section identifiers with corresponding code section start addresses in memory.

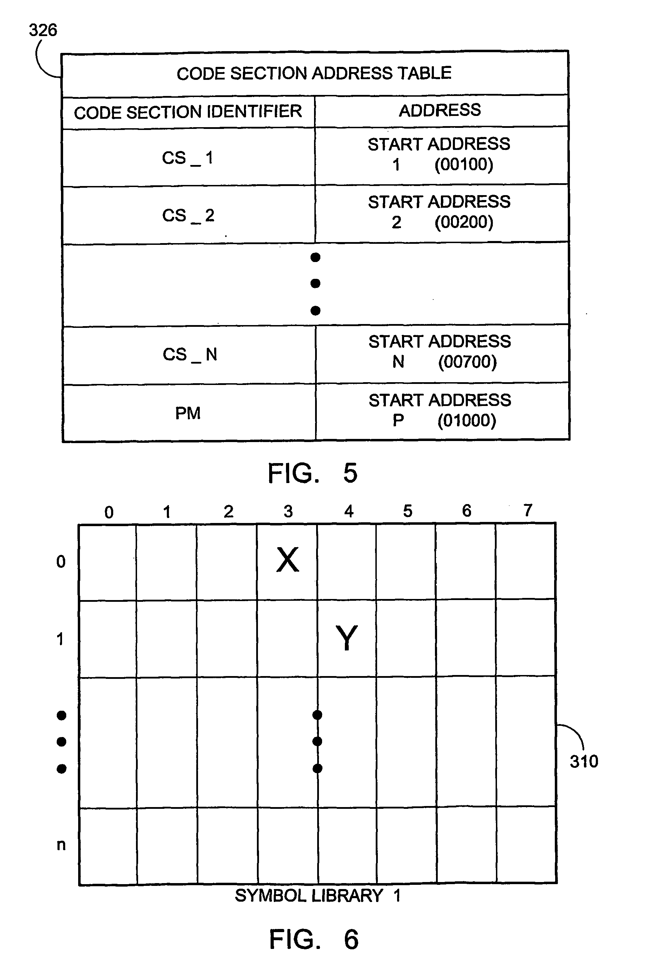

Fig. 5 is a table representing the code section address table 326 of Fig. 3. The code section address table 326 is consulted to find the code section start address for a symbol library. For example, the system 300 seeks code section one when a symbol in symbol library one is required for execution. To find the start address of code section one, and therefore locate the symbol in symbol library one, the code section address table 326 is consulted. The arrangement of symbol libraries in code sections, and the tracking of code sections with a table permits the code sections to be moved or expanded. The expansion or movement operations may be needed to install upgraded code sections (with upgraded symbol libraries).

Returning to Fig. 3, it should be noted that not every symbol library necessarily starts at the start of a code section. As shown, symbol library three (314) is arranged in code section two (304), but does not start of the code section start address 320. Thus, if a symbol in symbol library 3 (314) is required for execution, the system 300 consults the code section address table 326 for the start address of code section two (304). As explained below, a symbol offset address table permits the symbols in symbol library three (314) to be located. It does not matter that the symbols are spread across multiple libraries, as long as they are retained with the same code section.

As noted above, each symbol library includes functionally related symbols. A symbol is a programmer-defined name for locating and using a routine body, variable, or data structure. Thus, a symbol can be an address or a value. Symbols can be internal or external. Internal symbols are not visible beyond the scope of the current code section. More specifically, they are not sought by other symbol libraries, in other code sections. External symbols are used and invoked across code sections and are sought by libraries in different code sections. The symbol offset address table typically includes a list of all external symbols.

For example, symbol library one may generate characters on a wireless device display. Symbols in this library would, in turn, generate telephone numbers, names, the time, or other display features. Each feature is generated with routines, referred to herein as a symbol. For example, one symbol in symbol library one (310) generates telephone numbers on the display. This symbol is represented by an "X", and is external. When the wireless device receives a phone call and the caller ID service is activated, the system must execute the "X" symbol to generate the number on the display. Therefore, the system must locate the "X" symbol.

Fig. 6 is a detailed depiction of symbol library one (310) of Fig. 3, with symbols. Symbols are arranged to be offset from respective code section start addresses. In many circumstances, the start of the symbol library is the start of a code section, but this is not true if a code section includes more than one symbol library. Symbol library one starts at the start of code section one (see Fig. 3). As shown in Fig. 6, the "X" symbol is located at an offset of (03) from the start of the symbol library and the "Y" symbol is located at an offset of (15). The symbol offset addresses are stored in a symbol offset address table 328 in the patch manager code section (see Fig. 3).

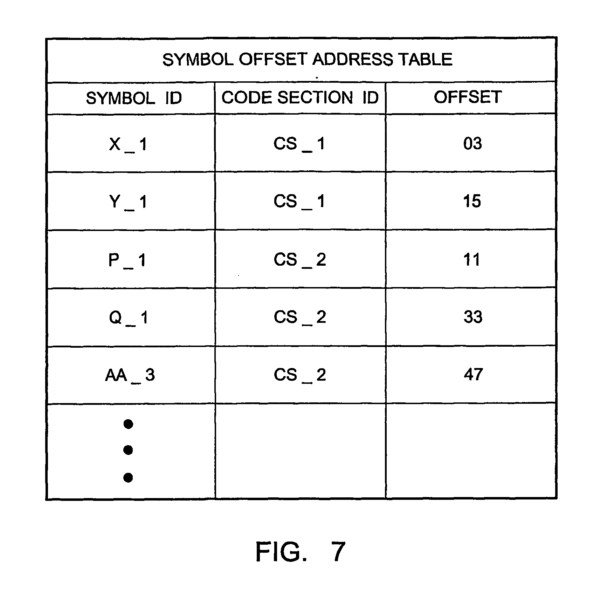

Fig. 7 is a table representing the symbol offset address table 328 of Fig. 3. The symbol offset address table 328 cross-references symbol identifiers with corresponding offset addresses, and with corresponding code section identifiers in memory. Thus, when the system seeks to execute the "X" symbol in symbol library one, the symbol offset address table 328 is consulted to locate the exact address of the symbol, with respect to the code section in which it is arranged.

Returning to Fig. 3, the first plurality of symbol libraries typically all include read-write data that must be consulted or set in the execution of these symbol libraries. For example, a symbol library may include an operation dependent upon a conditional statement. The read-write data section is consulted determine the status required to complete the conditional statement. The present invention groups the read-write data from all the symbol libraries into a shared read-write section. In some aspects of the invention, the read-write data 330 is arranged in the patch manager code section 308. Alternately (not shown), the read-write data can be arranged in a different code section, code section n (306), for example.

The first plurality of symbol libraries also includes symbol accessor code arranged in a code section to calculate the address of a sought symbol. The symbol accessor code can be arranged and stored at an address in a separate code section, code section 2 (304), for example. However, as shown, the symbol accessor code 332 is arranged and stored at an address in the patch manager code section 308. The system software structure 300 further comprises a first location for storage of the symbol accessor code address. The first location can be a code section in the code storage section 112, or in a separate memory section of the wireless device (not shown). The first location can also be arranged in the same code section as the read-write data. As shown, the first location 334 is stored in the patch manager code section 308 with the read-write data 330, the symbol offset address table 328, the code section address table 326, and the symbol accessor code 332, and the patch library (patch symbol library) 336.

The symbol accessor code uses the code section address table and symbol offset address tables to find the exact address of a sought symbol in memory. That is, the symbol accessor code accesses the code section address table and the symbol offset address table to calculate the address of the sought symbol. For example, if the "X" symbol in symbol library one is sought, the symbol accessor is invoked to seek the symbol identifier (symbol ID) X_1, corresponding to the "X" symbol (see Fig. 7). The symbol accessor code consults the symbol offset address to determine that the X_1 symbol identifier has an offset of (03) from the start of code section one (see Fig. 6). The symbol accessor code is invoked to seek the code section identifier CS_1, corresponding to code section one. The symbol accessor code consults the code section address table to determine the start address associated with code section identifier (code section ID) CS_1. In this manner, the symbol accessor code determines that the symbol identifier X_1 is offset (03) from the address of (00100), or is located at address (00103).

The symbol "X" is a reserved name since it is a part of the actual code. In other words, it has an absolute data associated with it. The data may be an address or a value. The symbol identifier is an alias created to track the symbol. The symbol offset address table and the code section address table both work with identifiers to avoid confusion with reserved symbol and code section names. It is also possible that the same symbol name is used across many symbol libraries. The use of identifiers prevents confusion between these symbols.

Returning to Fig. 1, the system software structure 300 further comprises a read-write volatile memory 114, typically random access memory (RAM). The read-write data 330, code section address table 326, the symbol offset address table 328, the symbol accessor code 332, and the symbol accessor code address 334 are loaded into the read-write volatile memory 114 from the patch manager section for access during execution of the system software. As is well known, the access times for code stored in RAM is significantly less than the access to a nonvolatile memory such as Flash.

Returning to Fig. 3, it can be noted that the symbol libraries need not necessarily fill the code sections into which they are arranged, although the memory blocks are sized to exactly accommodate the corresponding code sections stored within. Alternately stated, each of the second plurality of code sections has a size in bytes that accommodates the arranged symbol libraries, and each of the contiguously addressed memory blocks have a size in bytes that accommodates corresponding code sections. For example, code section one (302) may be a 100 byte section to accommodate a symbol library having a length of 100 bytes. The first memory block would be 100 bytes to match the byte size of code section one. However, the symbol library loaded into code section 1 may be smaller than 100 bytes. As shown in Fig. 3, code section one (302) has an unused section 340, as symbol library one (310) is less than 100 bytes. Thus, each of the second plurality of code sections may have a size larger than the size needed to accommodate the arranged symbol libraries. By "oversizing" the code sections, larger updated symbol libraries can be accommodated.

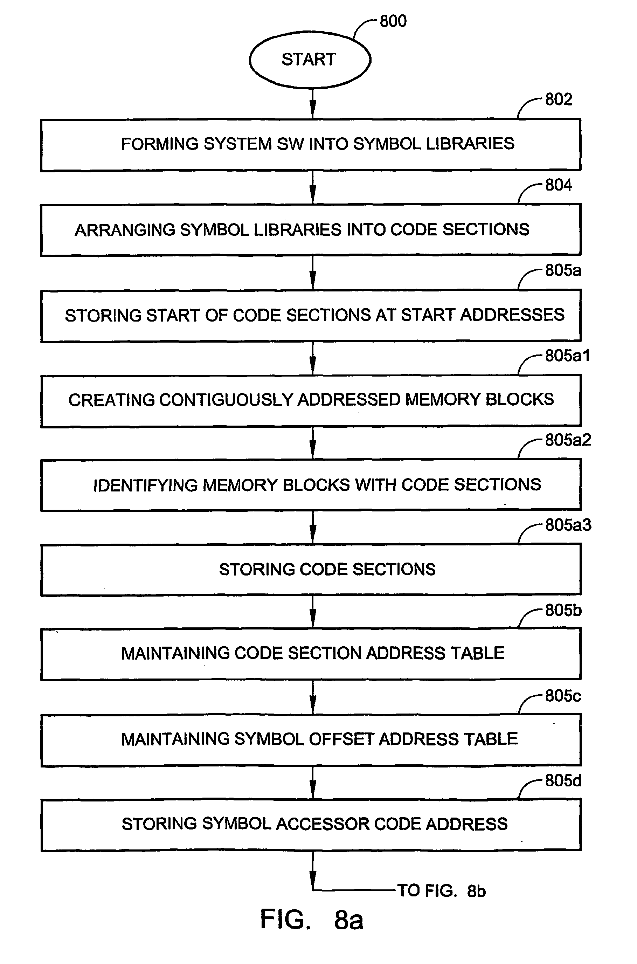

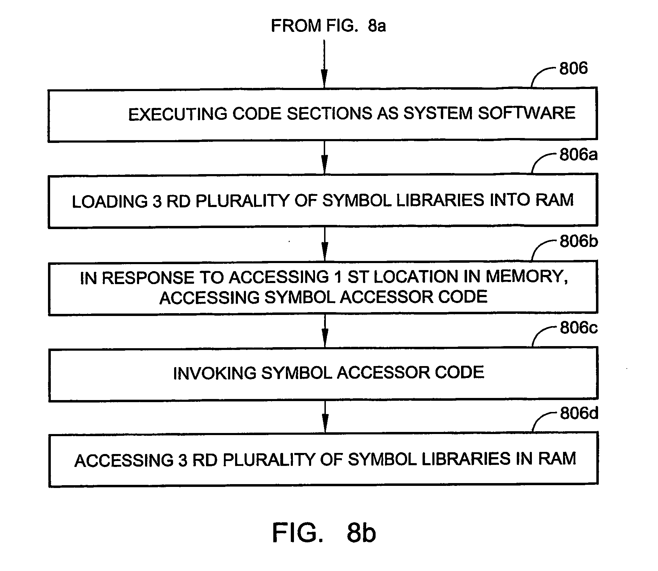

Figs. 8a and 8b are flowcharts illustrating the present invention method for organizing field upgradeable system software in a wireless communications device. Although the method is depicted as a sequence of numbered steps for clarity, no order should be inferred from the numbering unless explicitly stated. The method begins at Step 800. Step 802 forms system software into a first plurality of symbol libraries, each symbol library comprising symbols having related functionality. Step 804 arranges the first plurality of symbol libraries into a second plurality of code sections. Step 806 executes the wireless device system software.

Arranging the first plurality of symbol libraries into a second plurality of code sections in Step 804 includes starting symbol libraries at the start of code sections, and the method comprises further steps. Step 805a stores the start of code sections at corresponding start addresses. Step 805b maintains a code section address table cross-referencing code section identifiers with corresponding start addresses.

Arranging the first plurality of symbol libraries into a second plurality of code sections in Step 804 includes arranging symbols to be offset from their respective code section start addresses. Then, Step 805c maintains a symbol offset address table cross-referencing symbol identifiers with corresponding offset addresses, and corresponding code section identifiers.

In some aspects of the invention, forming system software code into a first plurality of symbol libraries in Step 802 includes forming read-write data for the plurality of symbol libraries. Arranging the first plurality symbol libraries into a second plurality of code sections in Step 804 includes arranging the read-write data in a shared read-write code section.

In some aspects of the invention, forming system software code into a first plurality of symbol libraries in Step 802 includes forming a symbol accessor code, and arranging the first plurality of symbol libraries into a second plurality of code sections in Step 804 includes arranging the symbol accessor code in a first code section. Then, the method comprises further a step. Step 805d stores the symbol accessor code address in a first location in memory. Then, executing the code sections as system software in Step 806 includes substeps. Step 806a loads a third plurality of symbol libraries into read-write volatile memory, typically RAM. The third plurality of symbol libraries need not necessarily include all the symbol libraries in the patch manager code section. The third plurality of symbol libraries can also include symbol libraries arranged in other code sections besides the patch manager code section. Step 806b, in response to referencing the first location in memory, accesses the symbol accessor code. Step 806c invokes the symbol accessor code to calculate the address of a sought symbol using a corresponding symbol identifier, and a corresponding code section identifier. Step 806d accesses the third plurality of symbol libraries in RAM.

Invoking the symbol accessor code to calculate the address of the sought symbol in Step 806b includes accessing the code section address table and the symbol offset address table to calculate the address of the sought symbol. Typically, storing the symbol accessor code address in a first location in memory in Step 805d includes storing the symbol accessor code address in the first code section.

In some aspects of the invention, arranging the first plurality of symbol libraries into a second plurality of code sections in Step 804 includes arranging read-write data, the code section address table, the symbol offset address table, and the symbol accessor code in the first code section, typically the patch manager code section. Then, Step 806a loads the read-write data, the code section address table, the symbol offset address table, the symbol accessor code, and the symbol accessor code address from the first code section into read-write volatile memory (typically RAM). Step 806d accesses the read-write data, the code section address table, the symbol offset address table, the symbol accessor code, and the symbol accessor code address from read-write volatile memory.

Storing the start of code sections at corresponding start addresses in Step 805a includes substeps. Step 805al creates a second plurality of contiguously addressed memory blocks. Step 805a2 identifies each memory block with a corresponding code section. Step 805a3 stores code sections in the identified memory blocks.

In some aspects of the invention, arranging the first plurality of symbol libraries into a second plurality of code sections in Step 804 includes arranging a third plurality of symbol libraries in a first code section. Then, identifying each memory block with a corresponding code section in Step 805a2 includes identifying a first memory block with the first code section, and storing code sections in the identified memory blocks in Step 805a3 includes storing the third plurality of symbol libraries in the first memory block.

Alternately, arranging the first plurality of symbol libraries into a second plurality of code sections in Step 804 includes arranging a first symbol library in a first code section. Then, identifying each memory block with a corresponding code section in Step . 805a3-includes identifying-a first memory block with the first code section, and storing code sections in the identified memory blocks in Step 805a3 includes storing the first symbol library in the first memory block.

Arranging the first plurality of symbol libraries into a second plurality of code sections in Step 804 includes sizing the code sections to accommodate arranged symbol libraries. Then, creating a second plurality of contiguously addressed memory blocks in Step 805a1 includes sizing memory blocks to accommodate corresponding code sections. Alternately, arranging the first plurality of symbol libraries into a second plurality of code sections in Step 804 includes sizing the code sections to accommodate sizes larger than the arranged symbol libraries.

A system and method have been provided for organizing wireless device system software for field updates via an airlink interface. The system is easily updateable because of the arrangement of symbol libraries in code sections, with tables to access the start addresses of the code sections in memory and the offset addresses of symbols in the symbol libraries. Although a few examples of these library arrangements and cross-referencing tables have been given for a display function, the present invention is not limited to just these examples. Other variations and embodiments of the invention will occur to those skilled in the art.

## Claims

1. A method for managing software in a wireless communications device (104), the method comprising:
arranging a plurality of symbols into a plurality of code sections (302, 304, 306, 308);
forming a symbol offset address table (328) cross referencing the symbols with corresponding offset addresses and corresponding code sections (302, 304, 306, 308);
receiving a software update (102) via a wireless communication, the software update (102) comprising an update symbol and an update symbol offset address table portion for updating at least a portion of the symbol offset address table (328);
storing the update symbol into one of the code sections (302, 304, 306, 308);
incorporating the update symbol offset address table portion into the symbol offset address table (328);
storing the start (318, 320, 322, 324, 408, 410, 412, 414) of code sections (302, 304, 306, 308) at corresponding start addresses; and
maintaining a code section address table cross-referencing code sections (302, 304,306,308) with corresponding start addresses (318, 320, 322, 324, 408, 41 0, 412, 414).

2. The method of claim 1, wherein a symbol comprises read-write data (330) and wherein the arranging step further comprises arranging the read-write data (330) in a shared read-write code section.

3. The method of claim 1, wherein the forming step further comprises:
forming a symbol accessor code (332);
arranging the symbol accessor code (332) in a code section (302, 304, 306, 308);
storing the symbol accessor code (332) address in memory; and
invoking the symbol accessor code (332) to calculate the address of a sought symbol using a corresponding symbol identifier, and a corresponding code section identifier.

4. The method of claim 3, wherein the invoking step further comprises accessing the code section address table and the symbol offset address table (328) to calculate the address of the sought symbol.

5. The method of claim 3, wherein storing the symbol accessor code address (334) in a first location in memory includes storing the symbol accessor code address (334) in the first code section (302, 304, 306, 308).

6. The method of claim 3, wherein the arranging the symbol accessor code (332) step further includes arranging read-write data (330), the code section address table, the symbol offset address table (328), and the symbol accessor code (332) all in a single one of the code sections (302, 304, 306, 308).

7. The method of claim 6, further comprising the step of executing field upgradeable system software, the step of executing including:
loading the read-write data (330), the code section address table, the symbol offset address table (328), the symbol accessor code (332), and the symbol accessor code (332) address from a code section (302, 304, 306, 308) into read-write volatile memory (114); and
accessing the read-write data (330), the code section address table, the symbol offset address table (328), the symbol accessor code (332), and the symbol accessor code address (334) from read-write volatile memory.

8. The method of claim 1, wherein storing the start (318,320,322,324,408,410,412, 414) of code sections (302, 304, 306, 308) at corresponding start addresses (318, 320, 322, 324, 408, 410, 412. 414) includes:
creating a plurality of contiguously addressed memory blocks;
identifying each memory block with a corresponding code section (302, 304, 306, 308); and
storing code sections (302, 304, 306, 308) in the respective identified memory blocks.

9. The method of claim 8, wherein arranging the plurality of symbols into a plurality of code sections (302, 304, 306, 308) includes arranging two or more symbols in a single code section (302, 304, 306, 308).

10. The method of claim 8, wherein arranging the plurality of symbols into a plurality of code sections (302, 304, 306, 308) includes arranging a single symbol in a single code section (302, 304, 306, 308).

11. The method of claim 8, wherein the step of arranging the first plurality of symbols comprises sizing a code section (302, 304, 306, 308) to accommodate sizes larger than the corresponding symbol.

12. A wireless communication device (104) having a field upgradeable system software, comprising:
executable field upgradeable system software differentiated into a plurality of code sections (302, 304, 306, 308), wherein each code section (302, 304, 306, 308) comprises one or more symbols, the symbols having corresponding offset addresses comprising offsets from start addresses (318, 320, 322, 324, 408, 410, 412, 414) of corresponding code sections (302, 304, 306, 308);
a symbol offset address table (328) cross referencing symbols with corresponding offset addresses and corresponding code sections (302, 304, 306, 308); and
a code section address table cross-referencing code sections (302, 304, 306, 308) with corresponding code section start addresses (318, 320, 322, 324, 408, 410, 412, 414) in memory.

13. The wireless communication device of claim 12, wherein the plurality of code sections (302, 304, 306, 308) includes a shared read-write section and wherein the plurality of symbol libraries includes read-write data (330) arranged in the read-write section.

14. The wireless communication device of claim 12, wherein the plurality of symbols includes a symbol accessor code (332) arranged in a first code section (302, 304, 306, 308) to calculate the address of a sought symbol and wherein the memory includes the symbol accessor code (332) stored at an address, further comprising:
a first location for storage of the symbol accessor code address (334).

15. The wireless communication device of claim 14, wherein the symbol accessor code (332) accesses the code section address table and the symbol offset address table (328) to calculate the address of the sought symbol.

16. The wireless communication device of claim 15, wherein the first location is in the first code section (302, 304, 306, 308).

17. The wireless communication device of claim 15, wherein the one or more symbols includes read-write data (330), the code section address table, the symbol offset address table (328), and the symbol accessor code (332) arranged in the first code section (302, 304, 306, 308).

18. The wireless communication device of claim 17, further comprising:
a read-write volatile memory (114), wherein the read-write data (330), code section address table, the symbol offset address table (328), the symbol accessor code (332), and the symbol accessor code address (334) are loaded into the read-write volatile memory (114) from the first code section (302, 304, 306, 308) for access during execution of the system software.

19. The wireless communication device of claim 12, wherein the memory comprises a plurality of contiguously addressed memory blocks, each memory block storing a corresponding code section (302, 304, 306, 308) from the plurality of code sections (302, 304, 306, 308).

20. The wireless communication device of claim 19, further comprising a memory block to store a first code section (302, 304, 306, 308), wherein the first code section (302, 304, 306, 308) comprises a plurality of symbol libraries arranged in the first code section (302,304,306,308).

21. The wireless communication device of claim 19, further comprising a memory block to store a first code section (302, 304, 306, 308), wherein the first code section (302, 304, 306, 308) comprises a single symbol library arranged in the first code section (302, 304, 306, 308).

22. The wireless communication device of claim 19, wherein each of the plurality of code sections (302, 304, 306, 308) has a size larger than the size needed to accommodate the arranged symbols.

23. The wireless communication device of claim 12, wherein the memory is a writeable, nonvolatile memory

## Patentansprüche

1. Verfahren zum Verwalten von Software in einer drahtlosen Kommunikationsvorrichtung (104), wobei das Verfahren aufweist:
Anordnen einer Mehrzahl von Symbolen in eine Mehrzahl von Code-Abschnitten (302, 304, 306, 308),
Bilden einer Symbol-Offset-Adresstabelle (328), die die Symbole mit jeweiligen Offset-Adressen und jeweiligen Code-Abschnitten (302, 304, 306, 308) querverweist,
Empfangen einer Software-Aktualisierung (102) mittels einer drahtlosen Kommunikation, wobei die Software-Aktualisierung (102) ein Aktualisierungs-Symbol und einen Aktualisierungs-Symbol-Offset-Adresstabellen-Abschnitt zum Aktualisieren von zumindest einem Abschnitt der Symbol-Offset-Adresstabelle (328) aufweist,
Speichern des Aktualisierungs-Symbols in einem der Code-Abschnitte (302, 304, 306, 308),
Integrieren des Aktualisierungs-Symbol-Offset-Adresstabellen-Abschnitts in die Symbol-Offset-Adresstabelle (328),
Speichern des Anfangs (318, 320, 322, 324, 408, 410, 412, 414) von Code-Abschnitten (302, 304, 306, 308) in jeweiligen Startadressen, und
Beibehalten einer Code-Abschnitts-Adresstabelle, die Code-Abschnitte (302, 304, 306, 308) mit jeweiligen Startadressen (318, 320, 322, 324, 408, 410, 412, 414) querverweist.

2. Verfahren gemäß Anspruch 1, wobei ein Symbol Lese-Schreib-Daten (330) aufweist und wobei der Schritt des Anordnens ferner das Anordnen der Lese-Schreib-Daten (330) in einem gemeinsam genutzten Lese-Schreib-Code-Abschnitt aufweist.

3. Verfahren gemäß Anspruch 1, wobei der Schritt des Ausbildens ferner aufweist:
Bilden eines Symbol-Zugriffsberechtigungs-Codes (332),
Anordnen des Symbol-Zugriffsberechtigungs-Codes (332) in einem Code-Abschnitt (302, 304, 306, 308),
Speichern der Adresse des Symbol-Zugriffsberechtigungs-Codes (332) in einem Speicher, und
Aufrufen des Symbol-Zugriffsberechtigungs-Codes (332) zum Berechnen der Adresse eines gesuchten Symbols mittels eines jeweiligen Symbol-Identifizierers und eines jeweiligen Code-Abschnitt-Identifizierers.

4. Verfahren gemäß Anspruch 3, wobei der Schritt des Aufrufens ferner das Zugreifen auf die Code-Abschnitts-Adresstabelle und die Symbol-Offset-Adresstabelle (328) zum Berechnen der Adresse des gesuchten Symbols aufweist.

5. Verfahren gemäß Anspruch 3, wobei das Speichern der Symbol-Zugriffsberechtigungs-Code-Adresse (334) an einer ersten Stelle im Speicher das Speichern der Symbol-Zugriffsberechtigungs-Code-Adresse (334) in dem ersten Code-Abschnitt (302, 304, 306, 308) aufweist.

6. Verfahren gemäß Anspruch 3, wobei der Schritt des Anordnens des Symbol-Zugriffsberechtigungs-Codes (332) ferner das Anordnen von Lese-Schreib-Daten (330), der Code-Abschnitts-Adresstabelle, der Symbol-Offset-Adresstabelle (328) und des Symbol-Zugriffsberechtigungs-Codes (332) alle in einem einzelnen der Code-Abschnitte (302, 304, 306, 308) aufweist.

7. Verfahren gemäß Anspruch 6, ferner den Schritt des Ausführens einer am Einsatzort aufrüstbaren System-Software aufweisend, wobei der Schritt des Ausführens aufweist:
Laden der Lese-Schreib-Daten (330), der Code-Abschnitts-Adresstabelle, der Symbol-Offset-Adresstabelle (328), des Symbol-Zugriffsberechtigungs-Codes (332) und der Adresse des Symbol-Zugriffsberechtigungs-Codes (332) aus einem Code-Abschnitt (302, 304, 306, 308) in einen flüchtigen Lese-Schreib-Speicher (114), und
Zugreifen auf die Lese-Schreib-Daten (330), die Code-Abschnitts-Adresstabelle, die Symbol-Offset-Adresstabelle (328), den Symbol-Zugriffsberechtigungs-Code (332) und die Symbol-Zugriffsberechtigungs-Code-Adresse (334) aus dem flüchtigen Lese-Schreib-Speicher.

8. Verfahren gemäß Anspruch 1, wobei das Speichern des Anfangs (318, 320, 322, 324, 408, 410, 412, 414) von Code-Abschnitten (302, 304, 306, 308) an jeweiligen Startadressen (318, 320, 322, 324, 408, 410, 412, 414) aufweist:
Erzeugen einer Mehrzahl von benachbart adressierten Speicherblöcken,
Identifizieren von jedem Speicherblock mit einem jeweiligen Code-Abschnitt (302, 304, 306, 308), und
Speichern von Code-Abschnitten (302, 304, 306, 308) in den jeweiligen identifizierten Speicherblöcken.

9. Verfahren gemäß Anspruch 8, wobei das Anordnen der Mehrzahl von Symbolen in eine Mehrzahl von Code-Abschnitten (302, 304, 306, 308) das Anordnen von zwei oder mehreren Symbolen in einem einzelnen Code-Abschnitt (302, 304, 306, 308) aufweist.

10. Verfahren gemäß Anspruch 8, wobei das Anordnen der Mehrzahl von Symbolen in eine Mehrzahl von Code-Abschnitten (302, 304, 306, 308) das Anordnen eines einzelnen Symbols in einem einzelnen Code-Abschnitt (302, 304, 306, 308) aufweist.

11. Verfahren gemäß Anspruch 8, wobei der Schritt des Anordnens der ersten Mehrzahl von Symbolen das Kalibrieren eines Code-Abschnitts (302, 304, 306, 308) aufweist, um Größen aufzunehmen, die größer sind als das jeweilige Symbol.

12. Drahtlose Kommunikationsvorrichtung (104), die eine am Einsatzort aufrüstbare System-Software aufweist, aufweisend:
eine ausführbare am Einsatzort aufrüstbare System-Software, die in eine Mehrzahl von Code-Abschnitten (302, 304, 306, 308) aufgeteilt ist, wobei jeder Code-Abschnitt (302, 304, 306, 308) ein oder mehrere Symbole aufweist, wobei die Symbole jeweilige Offset-Adressen aufweisen, die Offsets von Startadressen (318, 320, 322, 324, 408, 410, 412, 414) von jeweiligen Code-Abschnitten (302, 304, 306, 308) aufweisen,
eine Symbol-Offset-Adresstabelle (328), die Symbole mit jeweiligen Offset-Adressen und jeweiligen Code-Abschnitten (302, 304, 306, 308) querverweist, und
eine Code-Abschnitts-Adresstabelle, die Code-Abschnitte (302, 304, 306, 308) mit jeweiligen Code-Abschnitts-Startadressen (318, 320, 322, 324, 408, 410, 412, 414) in einem Speicher querverweist.

13. Drahtlose Kommunikationsvorrichtung gemäß Anspruch 12, wobei die Mehrzahl von Code-Abschnitten (302, 304, 306, 308) einen gemeinsam genutzten Lese-Schreib-Abschnitt aufweist, und wobei die Mehrzahl von Symbol-Bibliotheken Lese-Schreib-Daten (330) aufweist, die in dem Lese-Schreib-Abschnitt angeordnet sind.

14. Drahtlose Kommunikationsvorrichtung gemäß Anspruch 12, wobei die Mehrzahl von Symbolen einen Symbol-Zugriffsberechtigungs-Code (332) aufweist, der in einem ersten Code-Abschnitt (302, 304, 306, 308) zum Berechnen der Adresse eines gesuchten Symbols angeordnet ist, und wobei der Speicher den in einer Adresse gespeicherten Symbol-Zugriffsberechtigungs-Code (332) aufweist, ferner aufweisend:
eine erste Stelle zum Speichern der Symbol-Zugriffsberechtigungs-Code-Adresse (334).

15. Drahtlose Kommunikationsvorrichtung gemäß Anspruch 14, wobei der Symbol-Zugriffsberechtigungs-Code (332) auf die Code-Abschnitts-Adresstabelle und die Symbol-Offset-Adresstabelle (328) zum Berechnen der Adresse des gesuchten Symbols zugreift.

16. Drahtlose Kommunikationsvorrichtung gemäß Anspruch 15, wobei die erste Stelle in dem ersten Code-Abschnitt (302, 304, 306, 308) ist.

17. Drahtlose Kommunikationsvorrichtung gemäß Anspruch 15, wobei das eine oder die mehreren Symbole aufweist: Lese-Schreib-Daten (330), die Code-Abschnitts-Adresstabelle, die Symbol-Offset-Adresstabelle (328) und den Symbol-Zugriffsberechtigungs-Code (332), der in dem ersten Code-Abschnitt (302, 304, 306, 308) angeordnet ist.

18. Drahtlose Kommunikationsvorrichtung gemäß Anspruch 17, ferner aufweisend:
einen flüchtigen Lese-Schreib-Speicher (114), wobei die Lese-Schreib-Daten (330), die Code-Abschnitts-Adresstabelle, die Symbol-Offset-Adresstabelle (328), der Symbol-Zugriffsberechtigungs-Code (332) und die Symbol-Zugriffsberechtigungs-Code-Adresse (334) in den flüchtigen Lese-Schreib-Speicher (114) aus dem ersten Code-Abschnitt (302, 304, 306, 308) für einen Zugriff während der Ausführung der System-Software geladen werden.

19. Drahtlose Kommunikationsvorrichtung gemäß Anspruch 12, wobei der Speicher eine Mehrzahl von benachbart adressierten Speicherblöcken aufweist, wobei jeder Speicherblock einen jeweiligen Code-Abschnitt (302, 304, 306, 308) aus der Mehrzahl von Code-Abschnitten (302, 304, 306, 308) speichert.

20. Drahtlose Kommunikationsvorrichtung gemäß Anspruch 19, ferner einen Speicherblock zum Speichern eines ersten Code-Abschnitts (302, 304, 306, 308) aufweisend, wobei der erste Code-Abschnitt (302, 304, 306, 308) eine Mehrzahl von Symbol-Bibliotheken aufweist, die in dem ersten Code-Abschnitt (302, 304, 306, 308) angeordnet sind.

21. Drahtlose Kommunikationsvorrichtung gemäß Anspruch 19, ferner einen Speicherblock zum Speichern eines ersten Code-Abschnitts (302, 304, 306, 308) aufweisend, wobei der erste Code-Abschnitt (302, 304, 306, 308) eine einzelne Symbol-Bibliothek aufweist, die in dem ersten Code-Abschnitt (302, 304, 306, 308) angeordnet ist.

22. Drahtlose Kommunikationsvorrichtung gemäß Anspruch 19, wobei jeder von der Mehrzahl von Code-Abschnitten (302, 304, 306, 308) eine Größe aufweist, die größer ist als die Größe, die zum Aufnehmen der angeordneten Symbole benötigt wird.

23. Drahtlose Kommunikationsvorrichtung gemäß Anspruch 12, wobei der Speicher ein beschreibbarer nicht-flüchtiger Speicher ist.

## Revendications

1. Procédé de gestion de logiciel dans un dispositif de communication sans fil (104), le procédé comprenant les étapes consistant à :
agencer une pluralité de symboles dans une pluralité de sections de code (302, 304, 306, 308) ;
former une table d'adresses de décalage de symboles (328) établissant un référencement croisé des symboles avec les adresses de décalage correspondantes et les sections de code correspondantes (302, 304, 306, 308) ;
recevoir une mise à jour logicielle (102) par le biais d'une communication sans fil, la mise à jour logicielle (102) comprenant un symbole de mise à jour et une partie de table d'adresses de décalage de symboles de mise à jour pour mettre à jour au moins une partie de la table d'adresses de décalage de symboles (328) ;
stocker le symbole de mise à jour dans l'une des sections de code (302,304,306,308);
intégrer la partie de table d'adresses de décalage de symboles de mise à jour dans la table d'adresses de décalage de symboles (328) ;
stocker le début (318, 320, 322, 324, 408, 410, 412, 414) des sections de code (302, 304, 306, 308) aux adresses de début correspondantes ; et
maintenir une table d'adresses de sections de code établissant un référencement croisé des sections de code (302, 304, 306, 308) avec les adresses de début correspondantes (318, 320, 322, 324, 408, 410, 412, 414).

2. Procédé selon la revendication 1, dans lequel un symbole comprend des données de lecture-écriture (330) et dans lequel l'étape d'agencement comprend en outre l'agencement des données de lecture-écriture (330) dans une section de code de lecture-écriture partagée.

3. Procédé selon la revendication 1, dans lequel l'étape de formation comprend en outre :
la formation d'un code d'accesseur de symbole (332) ;
l'agencement du code d'accesseur de symbole (332) dans une section de code (302, 304, 306, 308) ;
le stockage de l'adresse de code d'accesseur de symbole (332) dans la mémoire ; et
l'invocation du code d'accesseur de symbole (332) pour calculer l'adresse d'un symbole recherché en utilisant un identificateur de symbole correspondant et un identificateur de section de code correspondant.

4. Procédé selon la revendication 3, dans lequel l'étape d'invocation comprend en outre l'accès à la table d'adresses de sections de code et à la table d'adresses de décalage de symboles (328) pour calculer l'adresse du symbole recherché.

5. Procédé selon la revendication 3, dans lequel le stockage de l'adresse de code d'accesseur de symbole (334) dans un premier emplacement de la mémoire comprend le stockage de l'adresse de code d'accesseur de symbole (334) dans la première section de code (302, 304, 306, 308).

6. Procédé selon la revendication 3, dans lequel l'étape d'agencement du code d'accesseur de symbole (332) comprend en outre l'agencement des données de lecture-écriture (330), de la table d'adresses de sections de code, de la table d'adresses de décalage de symboles (328) et du code d'accesseur de symbole (332) dans une seule des sections de code (302, 304, 306, 308).

7. Procédé selon la revendication 6, comprenant en outre l'étape d'exécution d'un logiciel système améliorable en clientèle, l'étape d'exécution comprenant :
le chargement des données de lecture-écriture (330), de la table d'adresses de sections de code, de la table d'adresses de décalage de symboles (328), du code d'accesseur de symbole (332) et de l'adresse de code d'accesseur de symbole (332) depuis une section de code (302, 304, 306, 308) dans la mémoire volatile de lecture-écriture (114) ; et
l'accès aux données de lecture-écriture (330), à la table d'adresses de sections de code, à la table d'adresses de décalage de symboles (328), au code d'accesseur de symbole (332) et à l'adresse de code d'accesseur de symboles (334) depuis la mémoire volatile de lecture-écriture.

8. Procédé selon la revendication 1, dans lequel le stockage du début (318, 320, 322, 324, 408, 410, 412, 414) des sections de code (302, 304, 306, 308) aux adresses de début correspondantes (318, 320, 322, 324, 408, 410, 412, 414) comprend :
la création d'une pluralité de blocs de mémoire adressés de manière contiguë ;
l'identification de chaque bloc de mémoire avec une section de code correspondante (302, 304, 306, 308) ; et
le stockage des sections de code (302, 304, 306, 308) dans les blocs de mémoire identifiés respectifs.

9. Procédé selon la revendication 8, dans lequel l'agencement de la pluralité de symboles dans une pluralité de sections de code (302, 304, 306, 308) comprend l'agencement de deux symboles ou plus dans une seule section de code (302, 304, 306, 308).

10. Procédé selon la revendication 8, dans lequel l'agencement de la pluralité de symboles dans une pluralité de sections de code (302, 304, 306, 308) comprend l'agencement d'un seul symbole dans une seule section de code (302, 304, 306, 308).

11. Procédé selon la revendication 8, dans lequel l'étape d'agencement de la première pluralité de symboles comprend le dimensionnement d'une section de code (302, 304, 306, 308) pour accueillir des tailles supérieures au symbole correspondant.

12. Dispositif de communication sans fil (104) ayant un logiciel système améliorable en clientèle, comprenant :
un logiciel système améliorable en clientèle exécutable différencié en une pluralité de sections de code (302, 304, 306, 308), dans lequel chaque section de code (302, 304, 306, 308) comprend un ou plusieurs symboles, les symboles ayant des adresses de décalage correspondantes comprenant les décalages par rapport aux adresses de début (318, 320, 322, 324, 408, 410, 412, 414) des sections de code correspondantes (302, 304, 306, 308) ;
une table d'adresses de décalage de symboles (328) établissant un référencement croisé des symboles avec les adresses de décalage correspondantes et les sections de code correspondantes (302, 304, 306, 308) ; et
une table d'adresses de sections de code établissant un référencement croisé des sections de code (302, 304, 306, 308) avec les adresses de début de sections de code correspondantes (318, 320, 322, 324, 408, 410, 412, 414) dans la mémoire.

13. Dispositif de communication sans fil selon la revendication 12, dans lequel la pluralité de sections de code (302, 304, 306, 308) comprend une section de lecture-écriture partagée et dans lequel la pluralité de bibliothèques de symboles comprend des données de lecture-écriture (330) agencées dans la section de lecture-écriture.

14. Dispositif de communication sans fil selon la revendication 12, dans lequel la pluralité de symboles comprend un code d'accesseur de symbole (332) agencé dans une première section de code (302, 304, 306, 308) pour calculer l'adresse d'un symbole recherché et dans lequel la mémoire comprend le code d'accesseur de symbole (332) stocké à une adresse, comprenant en outre :
un premier emplacement pour le stockage de l'adresse de code d'accesseur de symbole (334).

15. Dispositif de communication sans fil selon la revendication 14, dans lequel le code d'accesseur de symbole (332) accède à la table d'adresses de sections de code et à la table d'adresses de décalage de symboles (328) pour calculer l'adresse du symbole recherché.

16. Dispositif de communication sans fil selon la revendication 15, dans lequel le premier emplacement est dans la première section de code (302, 304, 306, 308).

17. Dispositif de communication sans fil selon la revendication 15, dans lequel le ou les symboles comprennent les données de lecture-écriture (330), la table d'adresses de sections de code, la table d'adresses de décalage de symboles (328) et le code d'accesseur de symbole (332) agencé dans la première section de code (302, 304, 306, 308).

18. Dispositif de communication sans fil selon la revendication 17, comprenant en outre :
une mémoire volatile de lecture-écriture (114) ;
dans laquelle les données de lecture-écriture (330), la table d'adresses de sections de code, la table d'adresses de décalage de symboles (328), le code d'accesseur de symbole (332) et l'adresse de code d'accesseur de symbole (334) sont chargés dans la mémoire volatile de lecture-écriture (114) depuis la première section de code (302, 304, 306, 308) pour l'accès pendant l'exécution du logiciel système.

19. Dispositif de communication sans fil selon la revendication 12, dans lequel la mémoire comprend une pluralité de blocs de mémoire adressés de façon contiguë, chaque bloc de mémoire stockant une section de code correspondante (302, 304, 306, 308) parmi la pluralité de sections de code (302, 304, 306, 308).

20. Dispositif de communication sans fil selon la revendication 19, comprenant en outre un bloc de mémoire pour stocker une première section de code (302, 304, 306, 308), dans lequel la première section de code (302, 304, 306, 308) comprend une pluralité de bibliothèques de symboles agencées dans la première section de code (302, 304, 306, 308).

21. Dispositif de communication sans fil selon la revendication 19, comprenant en outre un bloc de mémoire pour stocker une première section de code (302, 304, 306, 308), dans lequel la première section de code (302, 304, 306, 308) comprend une seule bibliothèque de symboles agencée dans la première section de code (302, 304, 306, 308).

22. Dispositif de communication sans fil selon la revendication 19, dans lequel chacune de la pluralité de sections de code (302, 304, 306, 308) a une taille supérieure à la taille nécessaire pour accueillir les symboles agencés.

23. Dispositif de communication sans fil selon la revendication 12, dans lequel la mémoire est une mémoire non volatile inscriptible.
